# FASCICULE DE BREVET EUROPEEN

(11) **EP 3 050 145 B1**
(45) Date de publication et mention de la délivrance du brevet: **21.11.2018**
(21) Numéro de dépôt: 14777064.8
(22) Date de dépôt: 25.09.2014
(51) Int. Cl.: H01M 8/1037, H01M 8/1072, H01M 8/106

(54) **SUPPORT CATIONIQUE FORMANT MEMBRANE ANIONIQUE HYBRIDE**
KATIONISCHE STÜTZE ZUR FORMUNG EINER HYBRIDEN ANIONISCHEN MEMBRAN
CATIONIC SUPPORT FORMING A HYBRID ANIONIC MEMBRANE

(30) Priorité: 27.09.2013 FR 1359366
(43) Date de publication de la demande: 03.08.2016
(73) Titulaire: Centre National de la Recherche Scientifique (C.N.R.S.), 75016 Paris (FR)
(72) Inventeur: GAUTHIER-MANUEL, Bernard, F-25000 Besancon (FR); EL MANSOURI EL MOUDEN, Jamal, F-25000 Besançon (FR)
(74) Mandataire: Lavoix
(86) Numéro de dépôt international: PCT/EP2014/070564
(87) Numéro de publication internationale: WO 2015/044308

(56) Documents cités:
- EP-A1- 1 548 863
- WO-A2-2004/091026
- FR-A1- 2 915 742
- MERY ET AL: "Covalent grafting of ion-exchanging groups on porous silicon for microsystem applications", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 126, no. 1, 13 décembre 2006 (2006-12-13), pages 120-125, XP022261795, ISSN: 0925-4005, DOI: 10.1016/J.SNB.2006.11.003
- PICHONAT T ET AL: "Realization of porous silicon based miniature fuel cells", JOURNAL OF POWER SOURCES, ELSEVIER SA, CH, vol. 154, no. 1, 9 mars 2006 (2006-03-09), pages 198-201, XP027937531, ISSN: 0378-7753 [extrait le 2006-03-09]
- Tristan Pichonat: "Étude, conception et réalisation d'une pile à combustible miniature pour applications portables (Thèse doctorale)", , 27 février 2004 (2004-02-27), XP055123608, Extrait de l'Internet: URL:http://tel.archives-ouvertes.fr/docs/0 0/04/86/60/PDF/tel-00010710.pdf [extrait le 2014-06-16]
- ALAIN WALCARIUS ET AL: "Ion-Exchange Properties and Electrochemical Characterization of Quaternary Ammonium-Functionalized Silica Microspheres Obtained by the Surfactant Template Route", LANGMUIR, vol. 22, no. 1, 1 janvier 2006 (2006-01-01), pages 469-477, XP055123619, ISSN: 0743-7463, DOI: 10.1021/la051916s
- PICHONAT T ET AL: "A new process for the manufacturing of reproducible mesoporous silicon membranes", JOURNAL OF MEMBRANE SCIENCE, ELSEVIER SCIENTIFIC PUBL.COMPANY. AMSTERDAM, NL, vol. 280, no. 1-2, 6 mars 2006 (2006-03-06), pages 494-500, XP024931988, ISSN: 0376-7388, DOI: 10.1016/J.MEMSCI.2006.02.010 [extrait le 2006-09-01] cité dans la demande

## Description

La présente invention concerne un support cationique formant notamment membrane anionique hybride. Plus particulièrement, la présente invention concerne une membrane anionique pour une pile à combustible, en particulier de type PEM (« Polymer Exchange Membrane »).

Un des composants essentiels au bon fonctionnement d'une pile à combustible de type PEM est la membrane conduisant les ions à l'intérieur de la pile. Traditionnellement ces piles fonctionnent en mode cationique et cette fonction est assurée par un coûteux conducteur protonique ionomère tel que le Nafion®. Cependant cela pose le problème technique d'imposer de fonctionner en régime cationique. Par ailleurs cela nécessite également de travailler avec le platine comme catalyseur. Ces problèmes techniques constituent un frein au développement de ces dispositifs. En effet le platine est un métal rare et coûteux qu'il conviendrait de remplacer par exemple par d'autres métaux moins coûteux comme le nickel, etc. De tels métaux sont actuellement utilisés dans des installations stationnaires de grande puissance fonctionnant à haute température pour travailler en régime anionique et ainsi remplacer le platine. Cependant ces procédés imposent de travailler à haute température et il conviendrait donc de disposer de membranes permettant de travailler à température ambiante. Ceci devrait ouvrir la porte aux piles à combustible anioniques miniatures.

Parmi les solutions envisagées ces dernières années on peut citer les polymères portant des fonctions ammonium quaternaires mais qui présentent l'inconvénient d'être fragiles et instables notamment à cause du gonflement induit par l'hydratation inhérente à son utilisation.

La présente invention a pour but de résoudre les problèmes techniques mentionnés ci-dessus.

Plus particulièrement, la présente invention a pour but de fournir une membrane anionique pouvant travailler à température ambiante dans une pile à combustible. La présente invention a pour but également de fournir une membrane anionique permettant de remplacer le platine par d'autres métaux en particulier moins coûteux, comme le nickel dans une pile à combustible. La présente invention a également pour but de fournir une membrane anionique stable en milieu alcalin.

Ainsi la présente invention a pour but de fournir une membrane peu coûteuse, stable et dont les performances conductimétriques s'approchent de celles des membranes protoniques classiques utilisées dans les piles à combustibles. Plus particulièrement, l'invention a pour but de fournir une membrane utilisée dans des dispositifs ou procédés de génération d'hydrogène et/ou d'oxygène par électrolyse de l'eau.

La présente invention a encore pour but de fournir une membrane utilisable dans un dispositif biologiquement compatible notamment pour l'implanter dans un corps humain ou animal.

Mery et al. (Covalent grafting of ion-exchanging groups on porous silicon for microsystem application Sensors and Actuators B: Chemical, vol. 126, no. 1, .13 décembre 2006 (2006-12-13), pages 120-125, ISSN: 0925-4005, DOI: 10.1016/J.SNB.2006.11.003) décrit une fonctionnalisation de silicium poreux par un bromure de triméthylammoniumpropyle et des groupes acide alkylsulfonique en milieu anhydre pour des applications comme composant de microsystèmes comme les dispositifs de chromatographie ionique ou les capteurs électrochimiques.

La demande EP 1 548 863 décrit une membrane électrolytique qui peut comprendre en surface un couplage d'une molécule stable par un agent de couplage qui peut être un silane. Les silanes envisagés sont : chlorosilane, méthoxysilane et éthoxysilane.

Ces deux documents ne suggèrent pas la présente invention.

La présente invention concerne selon un premier aspect un support cationique comprenant un support inorganique solide comprenant des pores, lesdits pores comprenant au moins en surface, lié par liaison covalente au support inorganique un gel de silice comprenant des groupes cationiques, dénommé ici « gel de silice cationique » ou « sol de silice cationique ».

Avantageusement, et dans le cadre de l'invention présentement revendiquée, le support inorganique solide comprenant des pores est un silicium poreux, un carbure de silicium poreux, une alumine poreuse ou un verre poreux.

Selon un mode de réalisation préféré, les groupes cationiques sont des groupes ammonium quaternaires.

Selon une variante avantageuse, les groupes cationiques, et en particulier ammoniums quaternaires, sont liés au gel de silice par au moins un groupe alkyl saturé, linéaire ou branché, éventuellement substitué.

Selon un mode de réalisation, les pores sont en totalité ou en partie comblés par le gel de silice cationique.

Selon un mode de réalisation, un groupe alkyl est choisi parmi méthyl, éthyl, propyl, butyl.

Avantageusement, le support inorganique de la présente invention est un silicium poreux.

Avantageusement, le support inorganique est un semi-conducteur.

Un semi-conducteur utilisé comme support solide permet de contrôler le pourcentage de porosité et les dimensions des pores. La matrice microporeuse électrochimiquement inerte imperméable aux gaz et dans une certaine mesure à certains liquides, fournit les propriétés de résistance mécanique et constitue une barrière à la diffusion des molécules de combustible, notamment pour des applications de membrane anionique, en particulier dans des piles à combustible. De plus, l'utilisation d'un semi-conducteur fournit des surfaces de qualité pour le traitement d'électrodes par dépôt.

L'utilisation d'un semi-conducteur permet également la mise en oeuvre de procédés faisant appel aux microtechnologies pour l'usinage et le dépôt des couches métalliques- et aux techniques d'accroche (« bounding ») classiques. Les microtechnologies permettent de réaliser des dépôts métalliques multicouches d'épaisseur optimisée. Il est ainsi possible d'intégrer les circuits électroniques de gestion de l'énergie. Le potentiel de microfabrication collective à partir des tranches ou « wafers » en matériaux semi-conducteurs permet la mise en oeuvre d'un nombre limité d'opérations, compatible avec de faibles coûts de production.

Le semi-conducteur est de préférence le silicium. Il est avantageusement utilisé sous la forme de tranches (wafers) aux dimensions standard, telles que 4 pouces (10,16 cm), 6 pouces (15,24 cm) ou 8 pouces (20,32 cm). L'épaisseur va généralement de 200 à 800 µm. Le semi-conducteur est de préférence oxydé au moins en surface pour le rendre isolant électrique sur des zones prédéterminées. Le substrat de silicium est généralement une plaque de silicium. Ce substrat contient de préférence au plus 10¹⁹cm⁻³ atomique d'impuretés telles que le bore ou le phosphore, par exemple. Le substrat de silicium poreux utilisé préférentiellement dans la présente invention est par exemple un substrat standard de la microélectronique, tel qu'un silicium dopé phosphore, de résistivité typiquement de l'ordre de 0,012 Ω.cm à 0,016 Ω.cm, ou un silicium dopé bore, de résistivité par exemple de l'ordre de 0,005 Ω.cm.

Le support poreux formant membrane anioniques est avantageusement réalisé par gravure d'un support inorganique. Selon un mode de réalisation, le support poreux formant membrane anioniques est avantageusement réalisé par gravure d'un semi-conducteur, par exemple ceux précités.

Pour le support poreux formant membrane anionique, on préfère les modes de réalisation qui consistent à rendre le silicium poreux par anodisation électrochimique. Le support présente une importante surface spécifique et une rugosité de surface élevée. Selon le procédé utilisé pour fabriquer le support poreux, on peut déposer sur du silicium une couche de dioxyde de silicium, qui est un isolant électrique. L'épaisseur du support peut être inférieure à l'épaisseur habituelle de 100 micromètres pour des membranes de pile à combustible et peut ainsi être, par exemple, de 40 micromètres environ. Une limite de l'épaisseur est la rigidité mécanique de la membrane. Le support inorganique poreux formant membrane anionique présente par exemple une épaisseur comprise entre 10 et 500 micromètres, et de préférence entre 20 et 100 micromètres, et encore de préférence entre 30 et 50 micromètres.

Le diamètre des canaux et la porosité du support sont définis par les conditions d'anodisation et peuvent être fixés selon les paramètres du procédé.

Pour la réalisation d'une membrane ionique pour pile à combustible, il est nécessaire que la membrane présente suffisamment de pores traversant suivant l'épaisseur de la membrane pour permettre une conductivité ionique (ions hydroxydes). Ce résultat peut être validé après préparation de la membrane en vérifiant sa conductivité ionique.

Suivant un mode de réalisation préféré, le silicium poreux employé est constitué de silicium mésoporeux, à savoir comportant des pores de taille comprise entre 2 et 50 nm (mésopores) et/ou microporeux, à savoir comportant des pores de taille inférieure à 2nm (micropores).

La présence de pores (mésopores et/ou micropores notamment) permet, entre autres, d'augmenter la surface spécifique du substrat de silicium. La porosité du silicium est comprise entre environ 10 % et environ 70 % en volume. La surface spécifique du silicium est comprise entre environ 200 et environ 900 m².cm⁻³. Cette surface spécifique peut, par exemple, être déterminée par la méthode BET lorsque le silicium est en quantité suffisante. La méthode BET précitée est la méthode de BRUNAUER-TELLER décrite notamment dans The Journal of the American Chemical Society, volume 60, page 309, fev 1938 et correspondant à la norme internationale ISO 5794/1. La surface spécifique d'un silicium peut, plus généralement, être déterminée par quantification de la masse d'une monocouche de silane auto-assemblée sur la surface du silicium poreux à caractériser.

Le silicium poreux peut être obtenu par traitement électrochimique d'un substrat de silicium avec un acide, cet acide étant avantageusement l'acide fluorhydrique.

Dans un mode de réalisation, le traitement électrochimique est une anodisation électrochimique qui est de préférence effectuée sur un substrat de silicium monocristallin, polycristallin ou amorphe. Après le traitement électrochimique, le substrat de silicium est devenu à la fois mésoporeux et/ou microporeux.

Le silicium poreux obtenu comporte en général des nano-cristallites et/ou des nano-particules de silicium de diverses formes géométriques, interconnectés ou non entre elles, dont au moins une dimension est inférieure ou égale à environ 100 nm et dont la somme des surfaces de chaque cristallite et/ou de nanoparticule est plus grande que la surface planaire occupée par le silicium.

Les diamètres des pores du support inorganique solide de silicium sont de préférence compris entre 5 et 40 nm (ce diamètre s'entend des pores du support inorganique avant liaison au gel de silice). Le diamètre des pores est mesuré par microsopie électronique à balayage (MEB) sur une coupe du matériau obtenu par clivage. Il s'agit du diamètre des pores observé au MEB.

Le fait que le silicium soit fortement dopé permet la mesure directe sans métallisation préalable de l'échantillon en utilisant un MEB à effet de champ.

Plus particulièrement, le support inorganique est préparé selon les méthodes connues de l'état de la technique. Il peut être obtenu par anodisation d'un support de silicium en milieu acide fluorhydrique, généralement en présence d'éthanol ou de tensioactif. Par exemple, le support de silicium poreux peut être préparé à partir d'un silicium dont la surface est oxydée, par exemple par oxydation thermique en milieu oxydant, puis on réalise une photolithographie à l'aide d'un masque pour décaper dans des conditions décapantes uniquement les parties exposées aux conditions décapantes, comme par exemple un décapage chimique avec BHF en milieu alcalin, puis des pores sont créés dans la couche superficielle de dioxyde de silicium par anodisation. Les pores peuvent être rendus hydrophiles par des traitements classiques. On peut se référer par exemple à la description de la demande internationale WO 2004/091026 ou à l'article de Tristan Pichonat, Bernard Gauthier-Manuel, A new process for the manufacturing of reproducible mesoporous silicon membranes, Journal of Membrane Science 280 (2006) 494. Ensuite, a lieu le couplage avec le gel de silice et la croissance du gel de silice greffé sur la surface de pores du support poreux.

Selon une variante, le silicium poreux est préparé à partir du support de silicium poreux hydrogéné décrit dans la demande de brevet internationale WO 2008/148988, dont la surface des pores est couplée au gel de silice. Eventuellement la surface des pores du support de silicium poreux hydrogéné est oxydée et hydroxylée préalablement au couplage avec le gel de silice.

Un support inorganique ne présentant pas en surface de fonctions Si-H ou Si-OH peut être activé (pour le greffage selon l'invention) par une étape d'activation de la surface pour créer des fonctions OH disponibles pour le greffage par un sol-gel de silice. Une telle étape d'activation peut être réalisée par exemple par activation de la surface du support inorganique par un traitement UV-ozone comme cela est par exemple décrit conformément à l'invention pour les membranes de silicium poreux. Le support peut ensuite être utilisé pour le greffage du sol-gel de silice. Une telle procédure peut être mise en oeuvre sur un support inorganique comprenant ou constitué de verre poreux, par exemple.

Selon une variante, la porosité en volume est de préférence comprise entre 40 et 60 % par rapport au volume du support inorganique poreux initial.

La porosité en volume correspond au rapport entre le volume des pores présents dans l'échantillon et le volume de l'échantillon. Cette porosité est déterminée, par exemple, par le calcul de l'indice de réfraction du silicium poreux à partir d'une mesure de réflectométrie optique, ou bien par la pesée en comparant les masses de l'échantillon avant et après l'anodisation.

Le support inorganique peut présenter une surface macroscopique extérieure de 10 mm² (surface de l'échantillon à l'exclusion de la surface des pores).

Le support cationique présente avantageusement, après couplage et greffage du gel de silice, les caractéristiques suivantes :
Une stabilité dimensionnelle, assurée par le squelette inorganique, indépendantes du taux d'hydratation du gel contenu dans les pores. Une conductivité ionique en générale supérieure à 5 mS/cm, de préférence supérieure à 8 mS/cm, et encore de préférence supérieure à 10 mS/cm. La conductivité ionique est mesurée par exemple par spectrométrie d'impédance dans une atmosphère saturée en eau (RH >98%) après un dépôt d'une couche d'or de 20 nm d'épaisseur par pulvérisation cathodique sur chaque face de la membrane.

Avantageusement, la concentration en groupes cationiques est comprise entre 0.5 et 10 mol/l de groupements cationiques. Cette concentration est mesurée par exemple précisément par spectrométrie infrarouge en transmission en mettant à profit la transparence optique du silicium poreux dopé dans cette gamme de fréquences. La quantification précise résulte de l'étalonnage préalable de l'aire de la bande associée à une liaison covalente caractéristique du groupement cationique, par exemple celle du doublet caractéristique des liaisons N-CH3 à 1481 et 1492 cm⁻¹ pour les groupes ammonium quaternaires, en utilisant le réactif en solution dans un solvant, par exemple le méthanol, à une concentration connue et placé dans une cellule liquide dont l'épaisseur est précisément mesurée simultanément par interférométrie. Cette concentration est rapportée à la concentration effective de gel de silice en tenant compte du volume de la porosité de l'échantillon.

Selon un second aspect la présente invention concerne un procédé de préparation d'un support cationique selon la présente invention, ledit procédé comprenant une réaction de couplage par liaison covalente (ou greffage) entre la surface de pores d'un support inorganique solide poreux, préalablement rendue réactive, et un silane ou un mélange de silane comprenant au moins un groupe cationique et au moins un groupe réactif avec la surface réactive du support inorganique, et l'obtention d'un support inorganique solide dont les pores comprennent au moins en surface un gel de silice comprenant des groupes cationiques, dénommé ici « gel de silice cationique » ou « sol de silice cationique ».

On peut représenter un silane selon la présente invention par la formule générale Si*ₘ*H_{2*m*+2}, où au moins un atome d'hydrogène est remplacé par un groupe réactif avec le support inorganique, comme un groupe halogène ou alcoxy, et au moins un autre atome d'hydrogène est remplacé par un substituant porteur d'un groupe cationique, m représente le nombre d'atomes de silicium dans le silane. Selon une variante préférée, m représente le chiffre 1.

Avantageusement, le substituant comprend un groupe espaceur entre l'atome de silicium et le groupe cationique. Selon une variante, un groupe espaceur est un groupe alkyl comprenant éventuellement un ou plusieurs hétéroatomes, par exemple choisi parmi O, N, et S, et/ou comprenant éventuellement un ou plusieurs groupes aromatiques.

Un ou plusieurs des atomes d'hydrogène présents dans le groupe espaceur peuvent être remplacés par exemple par un atome d'halogène, et de préférence par un atome de fluor. Le groupe espaceur peut notamment comprendre un groupe -CF₂-

Selon un mode de réalisation particulier, au moins une de R1, R2, R3 est un groupe alkyl. Selon une variante R1=R2=R3.

Avantageusement, le silane est un N-dialcoxysilylalkyl ou N-trialcoxysilylalkyl-N,N,N-tri-alcoxyammonnium de formule (I) : 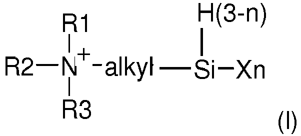 où n représente le chiffre 1, 2 ou 3, « alkyl » est un groupe alkyl saturé, linéaire ou branché, éventuellement substitué, R1, R2 et R3 sont des substituants de l'atome d'azote, identiques ou différents, X est un groupe réactif avec un groupe Si-OH.

De préférence, n représente le chiffre 2 ou 3 (silane difonctionnel ou trifonctionnel).

Par exemple, un groupe X réactif avec un groupe Si-OH ou AI-OH est un groupe hydroxy ou alcoxy. Parmi les groupes alcoxy on peut citer notamment les groupes alcoxy en C1-C4 et plus particulièrement les groupes méthoxy, éthoxy, et propoxy. On peut envisager d'utiliser des chlorosilanes (groupe Cl) mais les conditions sont plus difficiles à maitriser notamment en ce qui concerne le contrôle de l'hygrométrie.

Selon une variante le groupe X est un groupe méthoxy.

Avantageusement, le silane porte deux ou trois groupes X réactifs.

Avantageusement, la présence d'au moins une partie du mélange de silane comporte 3 groupes X réactifs de manière à permettre la croissance tridimensionnelle du greffage.

De préférence, dans la formule (I) les substituants R1, R2 et R3 sont choisis parmi un alkyl en C1-4 ou un atome de chlore.

On peut avantageusement utiliser un silane choisi parmi : le chlorure de diméthyloctadécyl[3-(triméhoxysilyl)propyl]ammonium (CAS 27668-52-6) ; le chlorure de N,N-didécyl-N-méthyl-N-(3-triméthoxysilylpropyl)ammonium (CAS 68959-20-6) ; le chlorhydrate de 3-(N-Styrylméthyl-2-aminoéthylamino)-propyltriméthoxysilane (CAS 34937-00-3) ; le chlorure de tétradécyldiméthyl(3-triméthoxysilylpropyl)ammonium (CAS 41591-87-1).

On utilise de préférence un chlorure de N-triméthoxysilylpropyl-N,N,N-triméthylammonium (CAS 35141-36-7) à titre de silane réactif pour greffer des groupes cationiques sur le support inorganique poreux.

Selon une première variante, le support est un silicium poreux, et ledit procédé comprend une oxydation du silicium poreux (Si-H) en surface des pores pour l'obtention de fonction Si-O-Si, et une hydroxylation de la silice obtenue en surface des pores pour l'obtention de fonctions (Si-OH), préalablement à la réaction de couplage.

La surface des pores du support inorganique est plus ou moins oxydée selon l'historique de la surface considérée, et notamment fonction des conditions de stockage, méthode de rinçage, et conditions d'oxydation.

Typiquement, les conditions d'oxydation sont les suivantes :
Le silicium poreux hydrogéné est par exemple immergé dans une solution d'acide nitrique à 35 % pendant 4 minutes. L'oxydation par un mélange piranha ou par de l'acide nitrique concentré se révèle trop puissante et les contraintes provoquées par l'épaisseur de la couche d'oxyde conduisent à la destruction des membranes.

Une procédure d'oxydation est par exemple décrite dans la demande WO 2004/091026.

Typiquement, les conditions d'hydroxylation (obtention des fonctions Si-OH) peuvent être les suivantes :
Le silicium poreux est immergé dans une solution aqueuse d'acide à pH 4 à 80°C pendant plusieurs minutes ou heures, typiquement 30 minutes.

On peut avantageusement placer le silicium poreux en présence d'ozone, par exemple obtenu à partir de l'oxygène par éclairage en lumière ultraviolette (28 mW/cm2, 30 minutes sur chaque face) générant directement des fonctions hydroxy.

Les fonctions Si-OH sont particulièrement aptes au couplage par liaison covalente avec une molécule silane portant des groupes réactifs. Ces conditions doivent permettre d'éviter la présence de fonctions Si-H ou O-Si-H résiduelles qui pourrait provoquer la dissolution du silicium en milieu basique. Il est possible de vérifier par spectroscopie infrarouge que les fonctions Si-H concernées sont bien oxydées. L'absence de liaisons Si-H ou O-Si-H en surface permet de stabiliser le support inorganique en milieu alcalin.

On réalise une activation (oxydation) préalable du support poreux : Le silicium poreux hydroxylé (surface portant des fonctions Si-OH hydrophiles et donc recouvertes d'un film d'eau) est tout d'abord oxydé, par exemple par chauffage, par exemple à 120°C plusieurs minutes dans un four pour créer des fonctions Si-OH non hydratées et donc réactives. Typiquement, les conditions de greffage sont les suivantes : La réaction de greffage a lieu par exemple par immersion du support poreux dans une solution de silane dans un alcool, comme par exemple le méthanol en conditions alcaline (pH 8-10 par exemple). La concentration massique de silane dans l'alcool, de préférence le méthanol, est comprise entre 20 et 70%, et de préférence est d'environ 50 %. Typiquement, le silane portant les fonctions cationiques (ammonium quaternaire par exemple) préalablement hydrolysé par action de l'eau à température ambiante et additionné de chlorure de potassium 1M pour écranter les charges électriques est introduit dans au moins une partie du volume poreux et on laisse la réaction se poursuivre pendant plusieurs heures à pH 9. Ensuite les échantillons peuvent être rincés puis étuvés, par exemple à 120°C pendant plusieurs minutes. Les ions K+ et Cl- provenant du chlorure de potassium peuvent être ensuite éliminés, par exemple par immersions dans de l'eau contenant des résines échangeuse d'ions.

Selon une deuxième variante, le support est un silicium poreux, et le couplage entre la surface de pores du support inorganique solide poreux et le silane ou mélange de silane est réalisé par réaction entre la surface de pores du support inorganique solide poreux comportant des fonctions Si-H et un silane porteur d'un ou plusieurs groupes alkoxy, et de préférence méthoxy.

Cette variante permet avantageusement d'éviter les étapes d'hydroxylation et d'activation (oxydation) de la première variante décrite ci-dessus. Avantageusement, on réalise un couplage (greffage) d'une première monocouche de gel de silice par immersion du support poreux dans une solution diluée de silane dans un alcool, de préférence le méthanol. La concentration massique de silane dans le méthanol varie par exemple de 0.1 à 10%. La concentration de silane dans le méthanol est typiquement de 5 %. Le greffage se réalise de préférence sous gaz inerte. Ces conditions permettent de faire réagir ainsi un silane ou mélange de silanes porteurs d'un ou plusieurs groupes alkoxy, de préférence méthoxy. Le support est ensuite placé en conditions hydrolysantes pour hydrolyser les molécules de silane greffées. Par exemple on peut immerger le support dans une solution hydrolysante, par exemple une solution acide à pH d'environ 3-5, typiquement à pH 4, Il peut s'agir d'une solution d'acide chlorhydrique. La croissance du gel de silice a lieu ensuite. Par exemple la croissance est réalisée par immersion du support dans une solution de silane dans un alcool, de préférence le méthanol, en conditions acides. Typiquement cette croissance est réalisée par immersion du support dans une solution de silane dans le méthanol plus concentrée qu'à l'étape de greffage de la monocouche. La concentration massique de silane dans le méthanol varie par exemple de 1 à 20%. Ensuite les échantillons peuvent être rincés puis étuvés par exemple à 120°C pendant plusieurs minutes.

La spectroscopie infrarouge permet de caractériser aisément toutes les étapes (oxydation, hydroxylation, greffage) avec une sensibilité inférieure à la monocouche moléculaire greffée.

Avantageusement, l'utilisation d'un silane tri-fonctionnel permet l'édification d'une structure multicouches tridimensionnelle greffée à l'intérieur de pores du support poreux, et plus particulièrement d'obtenir un volume plus important dans lequel des groupements cationiques sont présents.

Avantageusement, la réaction de couplage est réalisée selon un procédé sol-gel, notamment pour obtenir un gel de silice.

L'invention concerne encore un support cationique tel que préparé selon le procédé de l'invention.

Selon un troisième aspect, la présente invention concerne une membrane anionique constituée de ou comprenant un support cationique selon la présente invention. Le support cationique de l'invention peut être utilisé en milieu alcalin, ce qui permet de l'utiliser comme membrane anionique d'ions hydroxydes.

Selon un quatrième aspect, la présente invention concerne un dispositif comprenant une membrane anionique telle que définie selon la présente invention.

La membrane de l'invention peut être intégrée dans une architecture bipolaire ou unipolaire. La pile selon l'invention est notamment adaptée à l'alimentation des dispositifs électroniques portables.

Avantageusement, le dispositif est une pile à combustible comprenant une membrane (10) comprenant ou constituée d'un support inorganique tel que défini selon l'invention.

Des procédés de préparation de piles à combustible sont décrits dans l'art antérieur et sont applicables par analogie. On peut notamment se référer à la demande WO 2004/091026.

Les micropiles actuelles sont constituées d'un empilement de membranes et d'électrodes qui sont comprimées pour en garantir l'étanchéité.

Les micropiles selon l'invention peuvent être fabriquées en série selon les moyens automatisés de l'industrie des semi-conducteurs. La taille et la disposition géométrique des cellules peuvent être aisément adaptées.

Parmi les piles à combustible on peut citer notamment les piles à combustible eau-silicium hydrogéné.

Un silicium hydrogéné est décrit dans la demande de brevet internationale publiée sous le numéro WO 2008/148988, la demande de brevet français FR 2 915 742 et américain US 12/598745.

Selon une variante, le silicium hydrogéné est broyé, et éventuellement compacté.

Après le traitement électrochimique, tout ou partie de la surface du substrat de silicium, notamment du substrat de silicium poreux, comporte des groupements siliciums liés à des hydrogènes, -Si-H de surface, propres à la mise en oeuvre de la réaction (III) de production de l'hydrogène citée ci-après.

Selon un mode de réalisation, le dispositif de fourniture de dihydrogène de la pile à combustible comporte un système de chargement de silicium hydrogéné. Ce système permet une introduction initiale du silicium hydrogéné. Par ailleurs, du silicium hydrogéné additionnel peut être réintroduit dans le dispositif de fourniture d'hydrogène de la pile via ce système de chargement, lorsque le substrat de silicium initialement présent est entièrement consommé ou bien lorsqu'il est consommé au-delà d'un certain seuil, par exemple au-delà de 75%, voire 85%, mieux encore 95 % de substrat de silicium poreux hydrogéné initialement présent. Le système de chargement du silicium hydrogéné peut être un système de chargement externe, ou un système permettant l'échange d'une cartouche contenant le silicium hydrogéné. Le silicium hydrogéné est typiquement contenu dans un récipient amovible, par exemple une cartouche pouvant s'encliqueter de manière hermétique à la pile à combustible.

Une pile à combustible selon la présente invention peut présenter avantageusement :
- une partie cathodique comprenant une cathode ;
- une partie anodique comprenant une anode ;
- un ou plusieurs dispositifs de mise en contact d'une source d'eau et/ou d'une source d'oxygène avec la partie cathodique ;
- un silicium poreux hydrogéné en contact avec la partie anodique ;
- lesdites partie cathodique et partie anodique étant physiquement séparées par une membrane anionique selon la présente invention.

En fonctionnement, la partie cathodique met en oeuvre la réaction (I) :

**O₂+2H₂O+4e⁻->4OH**⁻ **(I)**

la partie anodique met en oeuvre la réaction (II)

**2H₂+4OH⁻->4H₂O+4e⁻** **(II)**,

et
l'eau au contact du silicium poreux hydrogéné permet de mettre en oeuvre la réaction (III) produisant du d'hydrogène :

**Si-Si-H+4OH⁻->2H₂+Si-H+Si(OH)₄** **(III)**

Les ions hydroxydes OH⁻ sont transférés de la cathode vers l'anode au travers de la membrane anionique selon la présente invention.

La solution alcaline utilisée dans le procédé de l'invention est de préférence une solution alcaline aqueuse. Le pH de la solution alcaline est compris notamment entre environ 8 et environ 14, de préférence entre environ 9 et 13, par exemple de l'ordre de 10. La base peut être choisie notamment parmi NaOH, KOH, et NH₄OH. De manière préférée, la solution alcaline aqueuse est une solution aqueuse de NaOH et/ou KOH.

L'invention concerne donc un procédé de production de dihydrogène, par exemple à partir d'eau et d'oxygène.

Selon l'invention, la température de réaction sur le silicium hydrogéné est en général comprise entre environ 10°C et environ 40°C, de préférence cette température est conduite à température ambiante. La réaction se fait de préférence à pression atmosphérique ou à des pressions légèrement plus élevées, généralement inférieures ou égales à environ 2 bars, comprises entre environ 1 bar et 1,5 bars.

Un avantage de l'utilisation de la réaction précitée est de permettre la fabrication du dihydrogène en une seule étape.

Un autre avantage est de permettre la régulation de la quantité d'eau apportée pour la réaction avec le silicium poreux hydrogéné. Le contrôle du courant électrique permet de réguler l'apport de dihydrogène.

Selon un mode de réalisation, la pile à combustible comprend en outre un système de chargement de l'eau au niveau de la partie cathodique. Ce système de chargement permet d'introduire initialement l'eau, et de la régénérer au cours de la vie de la pile, notamment pour la réapprovisionner en eau. Ce système de chargement d'eau permettant à la pile de fonctionner peut notamment être externe. Le dispositif peut fonctionner en continu.

Selon une variante particulièrement avantageuse, l'eau est apportée par l'atmosphère ambiante. Ainsi la source d'eau permet de mettre en contact l'humidité contenue dans l'atmosphère avec la cathode pour la mise en oeuvre de la réaction (I) ci-dessus.

Le plus souvent, la cathode de la pile fonctionne au dioxygène. Le dioxygène provient, par exemple, d'une réserve constituée d'air, de préférence de l'air enrichi, d'une réserve comportant du dioxygène pur ou de l'air ambiant. Le dioxygène est transporté, par exemple, à l'aide d'un tuyau ou équivalent de la réserve vers la cathode. A ce titre, la cathode est munie d'un orifice par lequel le tuyau ou équivalent est solidarisé.

Selon un mode de réalisation, la partie anodique et la partie cathodique comportent de préférence un milieu diffusant le dihydrogène et le dioxygène, ainsi qu'un catalyseur.

Le milieu diffusant est en général un conducteur électronique et est par exemple constitué de fibres de carbone tissées dans lesquelles sont incluses des particules de graphite poreuses. Les molécules de gaz passent dans ce cas au travers de la maille des fibres tissées et les électrons sont véhiculés par les fibres de carbone. Selon un autre mode de réalisation, il est aussi constitué d'un polymère réticulé perméable aux gaz tels que le PDMS (polydiméthysiloxane) chargé avec des particules de graphite poreuses.

Le catalyseur est constitué souvent par un métal finement divisé incorporé dans les particules de graphite poreuses. On peut utiliser le platine, mais comme indiqué précédemment on souhaite éviter ce métal. On peut donc utiliser en remplacement par exemple le nickel.

Plusieurs procédés peuvent être utilisés pour empiler les couches actives d'une pile à combustible. Un premier procédé consiste à superposer les couches les unes sur les autres, en général de l'anode vers la cathode pour former un empilement complet de micropile. Un second procédé consiste à réaliser l'anode et la cathode séparément, pour ensuite les assembler, par exemple sous presse. Bien que différents dans leur mode d'assemblage final, ces deux procédés utilisent des techniques de dépôt de couches similaires. On peut par exemple partir d'une couche de diffusion de gaz (GDL), qui correspond par exemple au silicium hydrogéné apte à générer du dihydrogène, puis déposer un collecteur d'anode (par exemple par pulvérisation cathodique, évaporation ou électrodéposition) puis déposer un catalyseur d'anode pour former la partie anodique. Le catalyseur d'anode peut-être déposée par pulvérisation (spray), jet d'encre ou électrodéposition. Ensuite, on peut déposer la membrane anodique selon la présente invention, par exemple par pulvérisation (spray) ou jet d'encre. On peut ensuite déposer, par exemple également par pulvérisation (spray) ou jet d'encre le catalyseur de cathode, puis le collecteur de cathode pour former la partie cathodique.

Selon une variante, le procédé de l'invention comprend successivement une préparation de plaquettes de silicium vierge, une oxydation thermique de celles-ci en surface, une pulvérisation cathodique de métaux conducteurs sur la surface oxydée, un dépôt d'une résine photosensible, une photolithographie de motifs à travers un masque, une révélation de motifs insolés, une gravure des couches de métaux conducteurs, une désoxydation de la surface destinée à recevoir la membrane anionique, une gravure humide des membranes, une anodisation de la membrane pour obtenir une membrane de silicium poreux, une gravure par plasma de la membrane en face arrière, une hydroxylation de la surface de la membrane de silicium poreux, une activation thermique de la membrane de silicium poreux, le greffage et la croissance par procédé sol-gel d'un gel de silice comprenant des groupes cationiques.

Selon une autre variante particulièrement avantageuse pour limiter les contraintes mécaniques sur le support inorganique, le procédé de l'invention comprend un greffage d'une monocouche d'un gel de silice comprenant des groupes cationiques par procédé sol-gel, une hydrolyse des molécules de silanes greffées, et une croissance par un procédé sol-gel du gel de silice greffée. Avantageusement le procédé comprend successivement une préparation de plaquettes de silicium vierge, une oxydation thermique de celles-ci en surface, une pulvérisation cathodique de métaux conducteurs sur la surface oxydée, une dépôt d'une résine photosensible, une photolithographie de motifs à travers un masque, une révélation de motifs insolés, une gravure des couches de métaux conducteurs, une désoxydation de la surface destinée à recevoir la membrane anionique, une gravure humide des membranes, une anodisation de la membrane pour obtenir une membrane de silicium poreux, une gravure par plasma de la membrane en face arrière, un greffage d'une monocouche d'un gel de silice comprenant des groupes cationiques par procédé sol-gel, une hydrolyse des molécules de silanes greffées, et une croissance par un procédé sol-gel du gel de silice greffée.

Le support obtenu est avantageusement rincé.

Afin d'assurer un contrôle de qualité du produit au cours de sa fabrication on peut réaliser des analyses par spectrométrie infrarouge (FTIR) entre certaines étapes de la fabrication. Plus particulièrement on peut réaliser un tel contrôle avant et/ou après greffage et/ou croissance du sol-gel.

Avantageusement, les supports préparés sont stockés dans de l'eau en présence de résine échangeuse d'ions hydroxydes.

Selon une variante, le greffage et/ou la croissance du gel de silice cationique est réalisée par immersion des membranes dans une solution de silane dans un solvant.

En comparaison au dispositif des demandes de brevet précitées, et notamment la demande WO 2008/148988, la présente invention a notamment pour avantage de réguler le débit de dihydrogène notamment par la régulation de la quantité d'eau rapportée en fonction du courant électrique entre l'anode et la cathode. Par ailleurs, la présente invention a pour avantage d'utiliser l'eau comme réactif et non plus comme produit de la réaction. Il n'est donc plus nécessaire de prévoir un récipient d'eau en contact avec le silicium poreux hydrogéné. De plus, l'eau contenue dans l'atmosphère ambiante (humidité de l'air) peut être utilisée comme source d'eau.

Plus particulièrement le dispositif de l'invention, et plus particulièrement la pile à combustible, peut être transportable ou fixe.

Avantageusement, le dispositif peut être biocompatible et comprendre une membrane (10) comprenant ou constituée d'un support inorganique tel que défini selon l'invention.

Dans l'invention, l'utilisation du terme « un » ou « une » signifie « au moins un » respectivement « au moins une ».

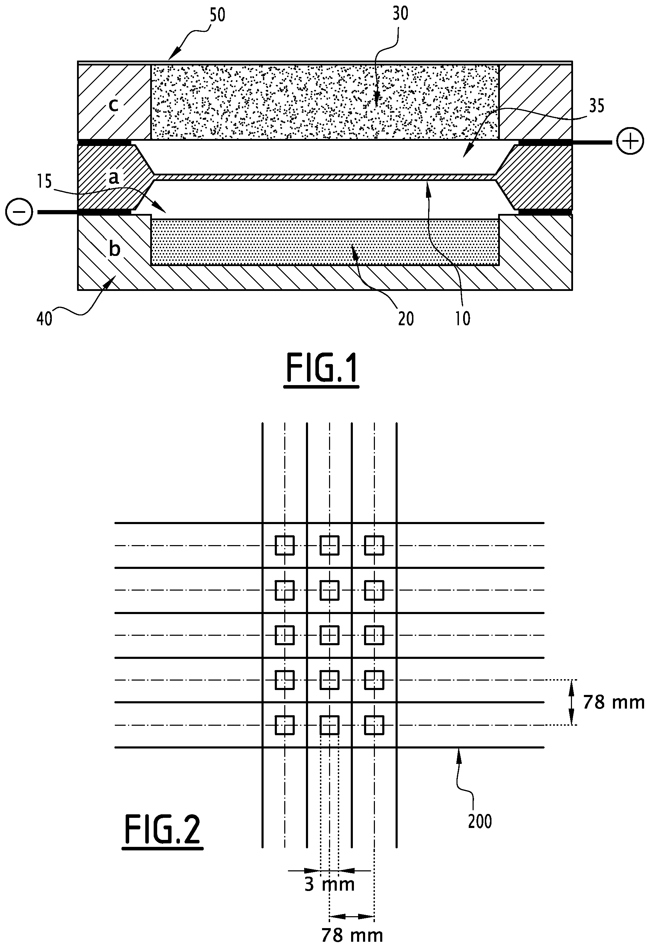

La figure 1 représente schématiquement une coupe d'une pile à combustible selon un mode de réalisation de l'invention. La pile est composée d'un empilement de trois plaquettes de silicium (a,b,c). La plaquette centrale (a) porte la membrane anionique (10). Sur la surface active de chaque face de la plaquette centrale (a) est déposée une encre catalytique anionique. La plaquette inférieure (b) est constituée de silicium poreux hydrogéné (20). La plaquette supérieure (c) constituée de silicium macroporeux perméable à l'oxygéne contient la réserve d'eau (30). Un film imperméable au dioxyde de carbone (PTFE par exemple) (50) isole la pile de toute contamination externe.

La figure 2 représente une vue schématique d'un masque pour la préparation de membranes selon l'invention.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention. Ainsi, chaque exemple a une portée générale.

D'autre part, dans les exemples, tous les pourcentages sont donnés en masse, sauf indication contraire, et la température est exprimée en degré Celsius et est celle ambiante (20-25°C), sauf indication contraire, et la pression est la pression atmosphérique (101325 Pa), sauf indication contraire.

### Exemples

### Exemple 1- Préparation du support cationique selon l'invention

### - Préparation de Plaquette de silicium

On prépare une paquette de silicium vierge. Le silicium utilisé est de type N+ dopé P, de résistivité p = 0, 012 - 0, 014Ω.cm, épaisseur 525 +/- 25 µm, poli double face.

### - Oxydation thermique

La plaquette de silicium est oxydée thermiquement dans un four à 1000°C sous flux d'oxygène et de vapeur d'eau pendant durée de 6 h 15 environ pour oxyder le silicium sur une épaisseur de 1,2 à 1,4 µm.

### - Pulvérisations cathodiques

On effectue ensuite une pulvérisation cathodique de chrome (Cr) puis d'or (Au) successivement sur chacune des faces de la plaquette sous un vide inférieur ou égal à 1.10⁻⁶ mbar. Appareil utilisé : Plassys MP 500.

Paramètres de dépôts utilisés :
- Nettoyage du substrat : 5 min à 150 W, pression de travail 0,13 mbar ;
- Nettoyage de la cible de Cr : 20 s à 0,5 A, pression de travail 0,07 mbar ;
- Dépôt de la couche de Cr : 20 s à 0,5 A (15 à 20 nm déposés), pression de travail identique ;
- Dépôt de la couche d'Au : 2 min à 0,6 A (environ 800 nm déposés), pression de travail identique.

### - Dépôt de la résine photosensible

On dépose de la résine photosensible Microposit® S 1813 sur chaque face : Paramètres de tournette :
- Dépôt préalable de 2 ml d'un promoteur d'adhérence de la résine sur le substrat, le HMDS (hexaméthyldichlorosulfate) :
- vitesse de rotation = 3000 tr.min⁻¹
- accélération = 3000 tr.min⁻²
- durée = 30 s
- Dépôt de la résine (3 ml) : paramètres de tournette identiques.

Paramètres de recuit de la résine : 20 s sur plaque chauffante à 120°C puis 5 min à température ambiante.
- **Photolithographie des motifs** à travers un masque en verre chromé. La résine Microposit® S 1813 s'insole avec une énergie de 60 mJ
- **Révélation des motifs insolés** dans le révélateur AZ® 726 pendant environ 30 s sur chaque face de la plaquette, avec agitateur (100 tr/min), puis rinçage à l'eau déionisée et séchage à l'azote.
- **Gravure de la couche d'Au** à l'emplacement des membranes révélées, avec une solution de gravure de l'or à base d'iode et d'iodure MICROPUR (société Sotra-chem) pendant environ 1 min avec agitateur (100 tr/min), puis rinçage à l'eau déionisée et séchage à l'azote.
- **Gravure de la couche de Cr** à l'emplacement des membranes révélées, avec une solution appropriée de gravure du Cr (Microposit® Cr Etch 18) pendant environ 20 s avec agitateur (100 tr/min), puis rinçage à l'eau déionisée et séchage à l'azote.
- **Désoxydation** à l'emplacement des membranes avec une solution de bifluorure d'ammonium (BHF, composée de 7 vol. de NH4 F et 1 vol. de HF) puis rinçage à l'eau déionisée et séchage à l'azote.
- **Gravure humide des membranes** dans une solution d'hydroxyde de potassium (KOH, 10 mol.l⁻¹ à 55°C). L'épaisseur des membranes est ajustée à 50 µm par chronométrage du temps de gravure (vitesses de gravure paramétrées → étape sous-traitée). Rinçage à l'eau déionisée et séchage à l'azote.
- **Anodisation** dans un bain composé d'acide fluorhydrique (en solution à 48 %) et d'éthanol pur dans des proportions 1 :1.

Densités de courant utilisées :
Pour le type N+ considéré:
- 50 mA.cm⁻² pour des diamètres de pores de 10 nm
- 100 mA.cm⁻² pour des diamètres de pores de 20 nm
- 250 mA.cm⁻² pour des diamètres de pores de 30 nm
Bref rincage à l'eau déionisée. Séchage à l'azote (opérer à faible pression).
- **Gravure plasma** (Reactive Ion Etching) des membranes en face arrière :
   Appareil utilisé : Plassys MG 200
   Procédé standard :
      - 20 sccm de SF6 ,
      - 7 sccm d'O2 ,
      - puissance : 75 W,
      - pression : 100 µbars,
      - durée : 4 min minimum.

### - Géométrie

La puce est un carré dont le coté est égal à 78 mm. La membrane est un carré dont le coté vaut 2.7 mm. Donc le masque est fait de carrés de 3 mm de côté avec une périodicité de 0.78 mm (voir figure 2). Les découpes peuvent s'effectuer selon les traits de découpe finale (200).

### - Contrôle FTIR

On vérifie que le silicium poreux est principalement sous forme Si-H est qu'il ne reste plus de silicium en face arrière. La présence d'un peu d'oxyde n'est pas gênante puisque l'étape suivante va consister à tout oxyder les fonctions Si-H Toutefois il semble que dans certains cas la présence de groupes OsiH présente une résistance à l'oxydation UVO (UV ozone).

### - Hydroxylation

UV ozone 28 mW/cm² 30 minutes sur chaque face (JELIGHT 42 UVO cleaner)

### - Contrôle FTIR

On vérifie que la surface du silicium poreux comporte des fonctions Si-OH et qu'il ne reste plus de fonctions Si-H ni de fonctions O-Si-H.

### - Activation

Le silicium est placé dans un four à 120°C pendant 15 minutes

### - Contrôle FTIR

On vérifie que la surface du silicium poreux comporte des fonctions Si-OH libres (bande fine à 3840 cm⁻¹).

### - Greffage Sol-Gel

Immersion des membranes dans la solution de silane dans le méthanol 50 % (CAS 35141-36-7) + KCl 1M à pH 9.

Réaction 9 heures à température ambiante.

Rincage puis étuvage à 120°C pendant 15 minutes.

### - Contrôle FTIR

On mesure la concentration en groupements ammonium quaternaire. Mesure rendue possible par un étalonnage préalable du doublet à 1480 cm⁻¹ effectué en cellule liquide d'épaisseur fixe mesurée.

### - Stockage

Les membranes sont plongées dans de l'eau en présence de résines échangeuses d'ion (type H⁺ et OH⁻) pour enlever les ions introduits par le chlorure de potassium et substituer les ions chlorure du silane par des ions hydroxydes.

### Exemple 2- Préparation du support cationique sans oxydation préalable du silicium hydrogéné selon l'invention

### - Préparation de Plaquette de silicium

On prépare une plaquette de silicium vierge de 4 pouces de diamètre. Le silicium utilisé est de type N+ dopé P, de résistivité p = 0, 012 - 0, 014Ω.cm, épaisseur 525 +/- 25 µm, poli double face.

### - Oxydation thermique

La plaquette de silicium est oxydée thermiquement dans un four à 1000°C sous flux d'oxygène et de vapeur d'eau pendant durée de 6 h 15 environ pour oxyder le silicium sur une épaisseur de 1,2 à 1,4 µm.
d'eau. Durée : 6 h 15 environ pour une épaisseur de 1,2 à 1,4 µm.

### - Pulvérisations cathodiques

On effectue ensuite une pulvérisation cathodique de chrome (Cr) puis d'or (Au) successivement sur chacune des faces de la plaquette à un vide ≤ 1.10 -6 mbar. Appareil utilisé : Plassys MP 500 .

Paramètres de dépôts utilisés :
- Nettoyage du substrat : 5 min à 150 W, pression de travail 0,13 mbar ;
- Nettoyage de la cible de Cr : 20 s à 0,5 A, pression de travail 0,07 mbar ;
- Dépôt de la couche de Cr : 20 s à 0,5 A (15 à 20 nm déposés), pression de travail identique ;
- Dépôt de la couche d'Au : 2 min à 0,6 A (environ 800 nm déposés), pression de travail identique.

### - Dépôt de la résine photosensible

On dépose de la résine photosensible Microposit® S 1813 sur chaque face : Paramètres de tournette :
- Dépôt préalable de 2 ml d'un promoteur d'adhérence de la résine sur le substrat, le HMDS (hexaméthyldichlorosulfate) :
- vitesse de rotation = 3000 tr.min⁻¹
- accélération = 3000 tr.min⁻²
- durée = 30 s
- Dépôt de la résine (3 ml) : paramètres de tournette identiques.

Paramètres de recuit de la résine : 20 s sur plaque chauffante à 120°C puis 5 min à température ambiante.
- **Photolithographie** des motifs à travers un masque en verre chromé. La résine Microposit® S 1813 s'insole avec une énergie de 60 mJ
- **Révélation des motifs insolés** dans le révélateur AZ® 726 pendant environ 30 s sur chaque face de la plaquette, avec agitateur (100 tr/min), puis rinçage à l'eau déionisée et séchage à l'azote.
- **Gravure de la couche d'Au** à l'emplacement des membranes révélées, avec une solution de gravure de l'or à base d'iode et d'iodure MICROPUR (société Sotra-chem) pendant environ 1 min avec agitateur (100 tr/min), puis rinçage à l'eau déionisée et séchage à l'azote.
- **Gravure de la couche de Cr** à l'emplacement des membranes révélées, avec une solution appropriée de gravure du Cr (Microposit® Cr Etch 18) pendant environ 20 s avec agitateur (100 tr/min), puis rinçage à l'eau déionisée et séchage à l'azote.
- **Désoxydation** à l'emplacement des membranes avec une solution de bifluorure d'ammonium (BHF, composée de 7 vol. de NH4 F et 1 vol. de HF) puis rinçage à l'eau déionisée et séchage à l'azote.
- **Gravure humide des membranes** dans une solution d'hydroxyde de potassium (KOH, 10 mol.l⁻¹ à 55°C). L'épaisseur des membranes est ajustée à 50 µm par chronométrage du temps de gravure (vitesses de gravure paramétrées → étape sous-traitée). Rinçage à l'eau déionisée et séchage à l'azote.
- **Anodisation** dans un bain composé d'acide fluorhydrique (en solution à 48 %) et d'éthanol pur dans des proportions 1 :1.

Densités de courant utilisées :
Pour le type N+ considéré:
   - 50 mA.cm⁻² pour des diamètres de pores de 10 nm
   - 100 mA.cm⁻² pour des diamètres de pores de 20 nm
   - 250 mA.cm⁻² pour des diamètres de pores de 30 nm

Bref rincage à l'eau déionisée. Séchage à l'azote (opérer à faible pression).
- **Gravure plasma** (Reactive Ion Etching) des membranes en face arrière :
   Appareil utilisé : Plassys MG 200
   Procédé standard :
      - 20 sccm de SF6 ,
      - 7 sccm d'O2,
      - puissance : 75 W,
      - pression : 100 µbars,
      - durée : 4 min minimum.

### - Géométrie

La puce est un carré dont le coté est égal à 78 mm. La membrane est un carré dont le coté vaut 2.7 mm. Donc le masque est fait de carrés de 3 mm avec une périodicité de 0.78 mm (voir figure 2). Les découpes peuvent s'effectuer selon les traits de découpe finale (200).

### - Contrôle FTIR

On vérifie que le silicium poreux est sous forme Si-H et qu'il ne reste plus de silicium en face arrière. Si on détecte un début d'oxydation (bande SiO₂ ou OsiH) on immerge à nouveau la membrane dans un mélange HF50 % éthanol 1:1 pendant 10 minutes.

### - Greffage monocouche

Immersion des membranes dans une solution diluée de silane dans le méthanol (moins de 0.014 % d'eau) à une concentration de l'ordre de 5 % (CAS 35141-36-7) pendant 10 h. Un barbotage d'azote U (moins de 5 cm³ eau /m³) est maintenu continuellement pendant toute la durée du greffage.

### - Contrôle FTIR

On contrôle la présence de groupements ammonium quaternaire (bandes caractéristiques N-CH₃ et NC-H₃. On vérifie que les molécules de silane greffées comportent encore des fonctions méthoxy non hydrolysées. On constate une très forte diminution des bandes caractéristiques des fonctions Si-H.

### - Hydrolyse des molécules de silane greffées

Immersion des membranes dans une solution d'acide chlorhydrique diluée à pH 4 pendant quelques heures.

### - Contrôle FTIR

On contrôle la stabilité des groupements ammonium quaternaire. On vérifie que les molécules de silane greffées sont maintenant totalement hydrolysées.

### - Croissance Sol-Gel

Immersion des membranes dans une solution de silane dans le méthanol 10 % (CAS 35141-36-7) à pH 4 Réaction 9 heures à température ambiante. Rinçage puis étuvage à 120°C pendant 15 minutes.

### - Contrôle FTIR

On mesure la concentration en groupements ammonium quaternaire. Mesure rendue possible par un étalonnage préalable du doublet à 1480 cm⁻¹ effectué en cellule liquide d'épaisseur fixe mesurée.

### - Stockage

Les membranes sont plongées dans de l'eau en présence de résines échangeuses d'ion (type OH⁻) pour remplacer les ions chlorure du silane par des ion hydroxyde.

Le silane utilisé dans les exemples 1 et 2 est le chlorure de N-triméthoxysilylpropyl-N,N,N-triméthylammonium.

### Exemple 3- Caractérisation du support cationique selon l'invention

### Exemple 3.1 - concentration des groupes cationiques

On peut quantifier par spectroscopie infrarouge les molécules actives (groupes ammoniums quaternaires) obtenues après un étalonnage du doublet caractéristique de ce groupement vers 1480 cm⁻¹. Il est possible de quantifier la concentration en molécules actives dans la membrane. Selon les conditions de l'exemple 1 les concentrations obtenues sont de l'ordre de 3 mol/l, permettant ainsi l'obtention d'une bonne conduction anionique. Compte tenu de la porosité égale à 50 % des membranes la concentration effectives de matériau actif dans les pores est donc de 6 mol/l.

### Exemple 3.2 - Conductivité

On peut caractériser la conductivité par spectroscopie d'impédance. Une fine couche d'or est déposée sur chaque surface d'un échantillon obtenu selon l'exemple 1, puis la conduction anionique est mesurée par spectroscopie d'impédance dans une atmosphère à humidité contrôlée (RH = 97%) à température ambiante (20°C). On obtient typiquement une conductivité de 20 mS/cm, ce qui est tout à fait intéressant pour des applications de membrane anionique, notamment pour des piles à combustible.

### Exemple 3.3 - Stabilité en milieu alcalin

Les tests suivants ont permis de caractériser la stabilité en milieu alcalin :

Lorsqu'une membrane de silicium poreux hydrogéné est mise au contact d'une solution alcaline des bulles de dihydrogène apparaissent rapidement traduisant la réaction III.

Une membrane de silicium poreux hydroxylée est immergée, après mesure du spectre infrarouge dans une solution d'ammoniac à pH 11 pendant 100h puis rincée.

Aucune bulle de gaz n'apparaît. Pour préciser cette stabilité on exploite ce spectre infrarouge qui permet la mesure du chemin optique n.e (n indice de réfraction, e épaisseur) par les interférences provenant des réflexions sur les deux faces de la membrane. Il n'est pas observé de variation du chemin optique.

La membrane est stable en milieu alcalin.

### Exemple 3.4 - Influence de la concentration du gel de silice dans les pores

Les expériences suivantes ont permis de quantifier l'influence de la concentration du gel de silice cationique dans les pores sur certaines propriétés du support cationique de l'invention : Plusieurs membranes sont réalisées en utilisant des solutions de silane de concentrations différentes et des temps de greffage différents. A l'issu du greffage la concentration en groupement ammonium quaternaire est mesurée puis après le dépôt d'une fine couche d'or sur chaque face de ces membranes la conductivité ionique est mesurée par spectroscopie d'impédance. Les résultats sont résumés dans le tableau 1 suivant :

**Tableau 1**

| [Ammonium quaternaire] greffés mol/l | Conductivité mS/cm |
|---|---|
| 0.5 | 9 |
| 1.3 | 14 |
| 2.9 | 20 |

A priori, le gel occupe la totalité du volume mis à sa disposition.

### Exemple 4 - Préparation d'une pile à combustible

Un exemple de réalisation est représenté par la figure 1.

La pile est composée d'un empilement de trois plaquettes (a,b,c) de silicium de dimensions 7mm x 7mm x 0.5 mm collées. La plaquette centrale (a) porte la membrane anionique (10) de 50 µm d'épaisseur occupant une surface de 10 mm² au centre de la plaquette (a). Elle est réalisée par greffage d'un gel de silane portant des fonctions ammoniums quaternaires sur la surface des pores d'une membrane de silicium mésoporeux. Elle assure la conductivité des ions hydroxydes au cours du fonctionnement de la pile.

Sur la surface de chaque face de la membrane (10) est déposé par spray ou par jet d'encre ou par dépôt de goutte tout simplement une encre catalytique anionique constituée d'un mélange 10:1 de poudre de graphite poreuse portant du platine et d'un conducteur anionique (silane utilisé pour la réalisation de la membrane) en solution dans un mélange eau-méthanol. La plaquette inférieure (b) est constituée de silicium poreux hydrogéné (20). Son rôle est de générer le dihydrogène par action de l'eau produite par le fonctionnement de la pile.

La plaquette supérieure (c) constitué de silicium macroporeux (30), perméable à l'oxygène contient la réserve d'eau. Elle peut être réalisée en silicium macroporeux imprégné d'eau par exemple et percée d'orifices pour le passage de l'oxygène. On peut aussi utiliser l'humidité de l'oxygène ambiant si elle est suffisante vis à vis du débit de courant exigé. Un film imperméable au dioxyde de carbone (50) (PTFE par exemple) isole la pile de toute contamination externe.

Les contacts électriques sont pris à la jonction des plaquettes en utilisant une colle conductrice d'électricité.

La cathode (35) est se situe en contact avec le silicium macroporeux (30) comprenant la réserve d'eau. L'anode (25) se situe en contact avec le silicium poreux hydrogéné (20).

## Revendications

1. Support cationique comprenant un support inorganique solide choisi parmi un silicium poreux, un carbure de silicium poreux, une alumine poreuse ou un verre poreux, ledit support comprenant des pores, lesdits pores comprenant au moins en surface, lié par liaison covalente au support inorganique un gel de silice comprenant des groupes cationiques, dénommé ici « gel de silice cationique » ou « sol de silice cationique », **caractérisé en ce que** le gel de silice forme une structure multicouches tridimensionnelle greffée à l'intérieur de pores du support poreux.

2. Support cationique, selon la revendication 1, **caractérisé en ce que** les groupes cationiques sont des groupes ammonium quaternaires.

3. Support cationique, l'une quelconque des revendications 1 à 2, **caractérisé en ce que** les groupes cationiques, et en particulier ammoniums quaternaires, sont liés au gel de silice par au moins un groupe alkyl saturé, linéaire ou branché, éventuellement substitué.

4. Support cationique, selon l'une quelconque des revendications 1 à 3, **caractérisé en ce que** les pores sont en totalité ou en partie comblés par le gel de silice cationique.

5. Membrane anionique **caractérisée en ce qu'**elle est constituée de ou comprend un support cationique tel que défini selon l'une quelconque des revendications 1 à 4.

6. Procédé de préparation d'un support cationique tel que défini selon l'une quelconque des revendications 1 à 4, **caractérisé en ce qu'**il comprend une réaction de couplage par liaison covalente ou greffage entre la surface de pores d'un support inorganique solide poreux choisi parmi un silicium poreux, un carbure de silicium poreux, une alumine poreuse ou un verre poreux, préalablement rendue réactive, et un silane ou un mélange de silane comprenant au moins un groupe cationique et au moins un groupe réactif avec la surface réactive du support inorganique, et l'obtention d'un support inorganique solide dont les pores comprennent au moins en surface un gel de silice comprenant des groupes cationiques, dénommé ici « gel de silice cationique » ou « sol de silice cationique », ledit silane étant un silane trifonctionnel permettant l'édification d'une structure multicouches tridimensionnelle greffée à l'intérieur de pores du support poreux.

7. Procédé selon la revendication 6, **caractérisé en ce qu'**il comprend un greffage d'une monocouche d'un gel de silice comprenant des groupes cationiques par procédé sol-gel, une hydrolyse des molécules de silanes greffées, et une croissance par un procédé sol-gel du gel de silice greffée.

8. Procédé selon la revendication 6, **caractérisé en ce qu'**il comprend successivement une préparation de plaquettes de silicium vierge, une oxydation thermique de celles-ci en surface, une pulvérisation cathodique de métaux conducteurs sur la surface oxydée, un dépôt d'une résine photosensible, une photolithographie de motifs à travers un masque, une révélation de motifs insolés, une gravure des couches de métaux conducteurs, une désoxydation de la surface destinée à recevoir le support cationique, une gravure humide du support cationique, une anodisation du support cationique pour obtenir une membrane de silicium poreux, une gravure par plasma de la membrane en face arrière, une hydroxylation de la surface de la membrane de silicium poreux, une activation thermique de la membrane de silicium poreux, le greffage et la croissance par procédé sol-gel d'un gel de silice comprenant des groupes cationiques.

9. Procédé selon la revendication 6, **caractérisé en ce qu'**il comprend successivement une préparation de plaquettes de silicium vierge, une oxydation thermique de celles-ci en surface, une pulvérisation cathodique de métaux conducteurs sur la surface oxydée, une dépôt d'une résine photosensible, une photolithographie de motifs à travers un masque, une révélation de motifs insolés, une gravure des couches de métaux conducteurs, une désoxydation de la surface destinée à recevoir le support cationique, une gravure humide du support cationique, une anodisation du support cationique pour obtenir une membrane de silicium poreux, une gravure par plasma de la membrane en face arrière, un greffage d'une monocouche d'un gel de silice comprenant des groupes cationiques par procédé sol-gel, une hydrolyse des molécules de silanes greffées, et une croissance par un procédé sol-gel du gel de silice greffée.

10. Procédé, selon la revendication 6, **caractérisé en ce que** le support est un silicium poreux, et **en ce que** ledit procédé comprend une oxydation du silicium poreux comportant des fonctions Si-H en surface des pores pour l'obtention de fonction Si-O-Si, et une hydroxylation de la silice obtenue en surface des pores pour l'obtention de fonctions OH, préalablement à la réaction de couplage.

11. Procédé, selon la revendication 6, **caractérisé en ce que** le support est un silicium poreux, et **en ce que** le couplage entre la surface de pores du support inorganique solide poreux et le silane ou mélange de silane est réalisé par réaction entre la surface de pores du support inorganique solide poreux comportant des fonctions Si-H et un silane porteur d'un ou plusieurs groupes alkoxy, et de préférence méthoxy.

12. Procédé selon la revendication 6, **caractérisé en ce que** la réaction de couplage est réalisée selon un procédé sol-gel.

13. Procédé selon la revendication 11, **caractérisé en ce qu'**il ne comprend pas d'étape d'hydroxylation et d'activation par oxydation du support poreux préalablement au couplage avec un silane.

14. Procédé selon l'une quelconque des revendications 6 à 13, **caractérisé en ce que** le silane est un N-dialcoxysilylalkyl ou N-trialcoxysilylalkyl-N,N,N-tri-alcoxyammonnium de formule (I) : 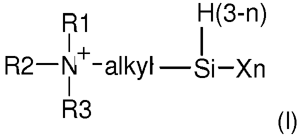 où n représente le chiffre 1, 2 ou 3, « alkyl » est un groupe alkyl saturé, linéaire ou branché, éventuellement substitué, R1, R2 et R3 sont des substituants de l'atome d'azote, identiques ou différents, X est un groupe réactif avec un groupe Si-OH.

15. Pile à combustible **caractérisée en ce qu'**elle comprend une membrane (10) comprenant ou constituée d'un support cationique tel que défini selon l'une quelconque des revendications 1 à 4 ou susceptible d'être obtenu par un procédé tel que défini selon l'une quelconque des revendications 6 à 14.

16. Dispositif biocompatible comprenant une membrane (10) comprenant ou constituée d'un support cationique tel que défini selon l'une quelconque des revendications 1 à 4 ou susceptible d'être obtenu par un procédé tel que défini selon l'une quelconque des revendications 6 à 14.

17. Utilisation d'un support cationique selon l'une quelconques des revendications 1 à 4 ou susceptible d'être obtenu par un procédé tel que défini selon l'une quelconque des revendications 6 à 14 comme membrane anionique, en particulier d'ions hydroxydes.

18. Utilisation d'un support cationique selon l'une quelconques des revendications 1 à 4 ou susceptible d'être obtenu par un procédé tel que défini selon l'une quelconque des revendications 6 à 14 comme membrane anionique, en particulier d'ions hydroxydes, dans une pile à combustible.

## Patentansprüche

1. Kationischer Träger aufweisend einen anorganischen festen Träger ausgewählt aus einem porösen Silicium, einem porösen Siliciumcarbid, einem porösen Aluminiumoxid oder einem porösen Glas, wobei der Träger Poren umfasst, wobei die Poren mindestens an der Oberfläche ein an den anorganischen Träger kovalent gebundes Kieselgel mit kationischen Gruppen aufweisen, hier gekennzeichnet als"kationisches Kieselgel" oder "kationisches Kieselerdesol",
**dadurch gekennzeichnet, dass**
das Kieselgel eine mehrschichtige dreidimensionale Struktur bildet, die in dem Inneren der Poren des porösen Trägers fixiert ist.

2. Kationischer Träger nach Anspruch 1, **dadurch gekennzeichnet, dass** die kationischen Gruppen quaternäre Ammoniumgruppen sind.

3. Kationischer Träger nach einem der Ansprüche 1 und 2, **dadurch gekennzeichnet, dass** die kationischen Gruppen, und insbesondere die quaternären Ammoniumgruppen, mit mindestens einer gesättigten, linearen oder verzweigten, gegebenenfalls substituierten Alkylgruppe an das Kieselgel gebunden sind.

4. Kationischer Träger nach einem der Ansprüche 1 bis 3, **dadurch gekennzeichnet, dass** die Poren ganz oder teilweise durch das kationische Kieselgel gefüllt sind.

5. Anionische Membran, **dadurch gekennzeichnet, dass** sie aus einem kationischen Träger, wie in einem der Ansprüche 1 bis 4 definiert, besteht oder diesen umfasst.

6. Verfahren zum Herstellen eines kationischen Trägers, wie in einem der Ansprüche 1 bis 4 definiert, **dadurch gekennzeichnet, dass** es umfasst eine Kopplungsreaktion durch kovalente Bindung oder Pfropfung zwischen der zuvor reaktiv gemachten Porenoberfläche eines anorganischen festen porösen Trägers ausgewählt aus einem porösen Silicium, einem porösen Siliciumcarbid, einem porösen Aluminiumoxid oder einem porösen Glas, und einem Silan oder einem Silangemisch, umfassend mindestens eine kationische Gruppe und mindestens eine Gruppe, die mit der reaktiven Oberfläche des anorganischen Trägers reaktiv ist, und das Erhalten eines anorganischen festen Trägers, dessen Poren mindestens auf der Oberfläche ein Kieselgel mit kationischen Gruppen umfassen, hierin gekennzeichnet als "kationisches Kieselgel" oder "kationisches Kieselerdesol ", wobei das Silan ein dreifunktionelles Silan ist, das die Bildung einer mehrschichtigen dreidimensionalen Struktur ermöglicht, die in dem Inneren der Poren des porösen Trägers fixiert ist.

7. Verfahren nach Anspruch 6, **dadurch gekennzeichnet, dass** es ein Fixieren einer Monoschicht eines Kieselgels mit kationischen Gruppen durch Sol-Gel-Verfahren umfasst, ein Hydrolysieren der fixierten Silanmoleküle und ein Wachsen des fixierten Kieselgels durch Sol-Gel-Verfahren.

8. Verfahren nach Anspruch 6, **dadurch gekennzeichnet, dass** es nacheinander aufweist ein Bereitstellen von unbehandelten Siliciumwafern, ein thermisches Oxidieren der Oberfläche der Siliciumwafer, ein Sputtern von leitenden Metallen auf der oxidierten Oberfläche, ein Abscheiden eines lichtempfindlichen Harzes, ein Aufbringen von Mustern durch Fotolithographie mittels einer Maske, ein Entwickeln der bestrahlten Muster, ein Ätzen der leitenden Metallschichten, ein Desoxidieren der Oberfläche zur Aufnahme des kationischen Trägers, ein Nassätzen des kationischen Trägers, ein Eloxieren des kationischen Trägers zum Erhalten einer Membran aus porösem Silicium, ein Plasmaätzen der Rückwandmembran, ein Hydroxylieren der Oberfläche der Membran aus porösen Silicium, ein thermisches Aktivieren der Membran aus porösen Silicium, ein Aufpfropfen und ein Wachsen durch Sol-Gel-Verfahren eines Kieselgels mit kationischen Gruppen.

9. Verfahren nach Anspruch 6, **dadurch gekennzeichnet, dass** es nacheinander aufweist ein Bereitstellen von unbehandelten Siliciumwafern, ein thermisches Oxidieren der Oberfläche der Siliciumwafer, ein Sputtern von leitenden Metallen auf der oxidierten Oberfläche, ein Abscheiden eines lichtempfindlichen Harzes, ein Aufbringen von Mustern durch Fotolithographie mittels einer Maske, ein Entwickeln der bestrahlten Muster, ein Ätzen der leitenden Metallschichten, ein Desoxidieren der Oberfläche zur Aufnahme des kationischen Trägers, ein Nassätzen des kationischen Trägers, ein Eloxieren des kationischen Trägers zum Erhalten einer Membran aus porösem Silicium, ein Plasmaätzen der Rückwandmembran, ein Fixieren einer Monoschicht eines Kieselgels mit kationischen Gruppen durch Sol-Gel-Verfahren, ein Hydrolisieren der fixierten Silanmoleküle, und ein Wachsen des fixierten Kieselgels durch Sol-Gel-Verfahren.

10. Verfahren nach Anspruch 6, **dadurch gekennzeichnet, dass** der Träger ein poröses Silicium ist, und dass das Verfahren umfasst ein Oxidieren des porösen Siliciums mit Si-H-Funktionen auf der Porenoberfläche, um Si-O-Si-Funktionen zu erhalten, und ein Hydroxylieren des auf der Porenoberfläche erhaltenen Siliciumoxid, um vor der Kopplungsreaktion Si-OH-Funktionen zu erhalten.

11. Verfahren nach Anspruch 6, **dadurch gekennzeichnet, dass** der Träger ein poröses Silicium ist, und dass die Kopplungsreaktion zwischen der Oberfläche der Poren des anorganischen festen porösen Trägers und dem Silan oder dem Silangemisch durch Reaktion zwischen der Oberfläche der Poren des anorganischen festen porösen Trägers mit Si-H-Funktionen und einem Silan mit einem oder mehreren Alkoxy-Gruppen, vorzugsweise Methoxy, erfolgt.

12. Verfahren nach Anspruch 6, **dadurch gekennzeichnet, dass** die Kopplungsreaktion gemäß einem Sol-Gel-Verfahren erfolgt.

13. Verfahren nach Anspruch 11, **dadurch gekennzeichnet, dass** es keine Hydroxylieren- und Aktivierenschritt durch Oxydieren des porösen Trägers vor der Kopplungsreaktion mit einem Silan umfasst.

14. Verfahren nach einem der Ansprüche 6 bis 13, **dadurch gekennzeichnet, dass** das Silan ein N-Dialkoxysilylalkyl- oder N-Trialkoxysilylalkyl-N,N,N-trialkoxyammonium der Formel (I) ist: 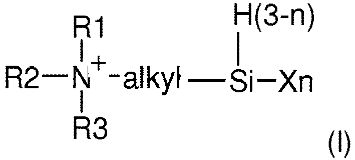 worin n die Zahl 1, 2 oder 3 bedeutet, "Alkyl" ist eine gesättigte, lineare oder verzweigte, gegebenenfalls substituierte Alkylgruppe ist, R1, R2 und R3 gleiche oder verschiedene Substituenten des Stickstoffatoms sind, X eine reaktive Gruppe mit einer Si-OH-Gruppe ist.

15. Brennstoffzelle, **dadurch gekennzeichnet, dass** sie eine Membran (10) aufweisend oder bestehend aus einem kationischen Träger aufweist, wie in einem der Ansprüche 1 bis 4 definiert, oder erhaltbar durch ein Verfahren, wie in einem der Ansprüche 6 bis 14 definiert.

16. Biokompatible Vorrichtung umfassend eine Membran (10) umfassend oder bestehend aus einem kationischen Träger, wie in einem der Ansprüche 1 bis 4 definiert, oder erhaltbar durch ein Verfahren, wie in einem der Ansprüche 6 bis 14 definiert.

17. Verwendung eines kationischen Trägers nach einem der Ansprüche 1 bis 4 oder erhaltbar durch ein Verfahren wie in einem der Ansprüche 6 bis 14 definiert, als anionische Membran, insbesondere von Hydroxidionen.

18. Verwendung eines kationischen Trägers nach einem der Ansprüche 1 bis 4 oder erhaltbar durch ein Verfahren wie in einem der Ansprüche 6 bis 14 definiert, als anionische Membran, insbesondere von Hydroxidionen, in einer Brennstoffzelle.

## Claims

1. A cationic support comprising a solid inorganic support selected among a porous silicon, a porous silicon carbide, a porous alumina or a porous glass, said support comprising pores, said pores comprising at least at the surface, bound through a covalent bond to the inorganic support, a silica gel comprising cationic groups, designated here as "cationic silica gel" or "cationic silica sol", **characterized in that** the silica gel forms a tridimensional structure grafted inside the pores of the porous support.

2. The cationic support according to claim 1, **characterized in that** the cationic groups are quaternary ammonium groups.

3. The cationic support according to claim 1 or 2, **characterized in that** the cationic groups, and in particular the quaternary ammoniums, are bound to the silica gel through at least one linear or branched saturated alkyl group, optionally substituted.

4. The cationic support according to any of claims 1 to 3, **characterized in that** the pores are in totality or partly filled with the cationic silica gel.

5. An anionic membrane **characterized in that** it consists of or comprises a cationic support as defined according to any of claims 1 to 4.

6. A process for preparing a cationic support as defined according to any of claims 1 to 5, **characterized in that** it comprises a coupling reaction by a covalently bonding or grafting between the surface of pores of a porous solid inorganic support selected among a porous silicon, a porous silicon carbide, a porous alumina or a porous glass, made reactive beforehand, and a silane or a silane mixture comprising at least one cationic group and at least one reactive group with the reactive surface of the inorganic support, and the obtaining of a solid inorganic support, the pores of which comprise at least at the surface a silica gel comprising cationic groups, designated here as "cationic silica gel" or "cationic silica sol".

7. Process according to claim 6, **characterized in that** it comprises grafting a monolayer of a silica gel comprising cationic groups by sol-gel process, hydrolyzing the grafted silane molecules, and growing the grafted silica gel by a sol-gel process.

8. Process according to claim 6, **characterized in that** it comprises successively a preparation of virgin silicon wafers, a thermal oxidation of these on the surface, a cathode sputtering of conductive metals on the oxidized surface, a deposition of a photosensitive resin, a photolithography of patterns through a mask, a revelation of insolated patterns, an etching of the conductive metal layers, a deoxidation of the surface for receiving the cationic support, a wet etching of the cationic support, an anodization of the cationic support to obtain a porous silicon membrane, a plasma etching of the membrane on the back side, a hydroxylation of the surface of the porous silicon membrane, a thermal activation of the porous silicon membrane, the grafting and the growth by sol-gel process of a silica gel containing cationic groups.

9. Process according to claim 6, **characterized in that** it comprises successively a preparation of virgin silicon wafers, a thermal oxidation of these on the surface, a cathode sputtering of conductive metals on the oxidized surface, a deposition of a photosensitive resin, a photolithography of patterns through a mask, a revelation of insolated patterns, an etching of the conductive metal layers, a deoxidation of the surface for receiving the cationic support, a wet etching of the cationic support, an anodization of the cationic support to obtain a porous silicon membrane, a plasma etching of the membrane on the back side, a grafting of a monolayer of a silica gel comprising cationic groups by sol-gel process, a hydrolysis of the grafted silane molecules, and a growth by a sol-gel process of the grafted silica gel.

10. Process according to claim 6, **characterized in that** the support is a porous silicon, and **in that** said method comprises oxidation of the porous silicon Si-H at the surface of the pores in order to obtain a Si-O-Si function, and hydroxylation of the silica obtained at the surface of the pores for obtaining Si-OH functions, prior to the coupling reaction.

11. Process according to claim 6, **characterized in that** the support is a porous silicon, and **in that** the coupling between the surface of the pores of the porous solid inorganic support and the silane or silane mixture is achieved by reaction between the surface of pores of the porous solid inorganic support including Si-H functions and a silane bearing one or several alkoxy groups, and preferably methoxy groups.

12. Process according to claim 6, **characterized in that** the coupling reaction is achieved according to a sol-gel method.

13. Process according to claim 11, **characterized in that** it does not comprise step of hydroxylation and activation by ooxydation of the porous support prior to coupling with a silane.

14. Process according to any of claims 6 to 13, **characterized in that** the silane is an N-dialkoxysilylalkyl or N-trialkoxysilylalkyl-N,N,N-tri-alkoxyammonium of formula (I): 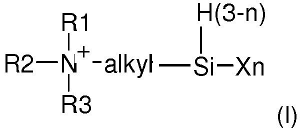 wherein n represents the figure 1, 2 or 3, "alkyl" is a linear or branched saturated alkyl group optionally substituted, R1, R2 and R3 are substituents of the nitrogen atom, either identical or different, X is a reactive group with a Si-OH group.

15. Fuel cell characterizing that it comprises a membrane (10) comprising or consisting of a cationic support as defined according to any of claims 1 to 4 or obtainable by a process according to any one of claims 6 to 14.

16. Biocompatible device comprising a membrane (10) comprising or consisting of a cationic support as defined according to any of claims 1 to 5 or obtainable by a process according to any one of claims 6 to 14.

17. Use of a cationic support according to any of claims 1 to 4 or obtainable by a process as defined according to any of claims 6 to 14 as an anionic membrane, in particular hydroxide ions.

18. Use of a cationic support according to any of claims 1 to 4 or obtainable by a process as defined according to any of claims 6 to 14 as an anionic membrane, in particular hydroxide ions, in a fuel cell.
